# EUROPÄISCHE PATENTSCHRIFT

(11) **EP 2 270 942 B1**
(45) Veröffentlichungstag und Bekanntmachung des Hinweises auf die Patenterteilung: **28.11.2012**
(21) Anmeldenummer: 10010530.3
(22) Anmeldetag: 14.12.2007
(51) Int. Cl.: H02G 3/22, F16L 5/02

(54) **Verfahren zur Befestigung einer Leitungsdurchführung durch eine Gebäudewand**
Method for securing a cable duct through a building wall
Méthode pour fixer un passage de câbles à travers un mur de bâtiment

(43) Veröffentlichungstag der Anmeldung: 05.01.2011
(62) Teilanmeldung aus: 07024323.3
(73) Patentinhaber: Hauff-Technik GmbH & Co. KG, 89542 Herbrechtingen (DE)
(72) Erfinder: Scheuring, Horst, 89182 Bernstadt (DE)
(74) Vertreter: Szynka, Dirk

(56) Entgegenhaltungen:
- EP-A- 1 101 993
- DE-A1- 19 628 988
- JP-A- 8 019 143

## Beschreibung

Diese Erfindung betrifft die Befestigung einer Leitungsdurchführung in einer Durchlassöffnung einer Gebäudewand.

Überall dort, wo in Gebäuden Kabel und Rohre ein- oder ausgeführt werden müssen, ist eine Durchführung dieser Leitungen durch eine Durchlassöffnung in einer Gebäudewand notwendig. Dabei ist neben der mechanischen Befestigung der Leitung in der Gebäudewand vor allem die Abdichtung der Durchlassöffnung gegen den Durchtritt von Wasser oder anderen Flüssigkeiten herzustellen.

Konventionell erfolgt dies beispielsweise durch Vermörteln, wobei die Durchlassöffnung in der Gebäudewand mit der durchgeführten Leitung auf beiden Seiten der Gebäudewand verschalt und das die Leitung umgebende Volumen innerhalb der Durchlassöffnung mit einem Mörtel gefüllt wird. Aufgrund der dafür notwendigen Verschalung und der langen Trocknungszeiten der Mörtel ist dieses Verfahren relativ aufwändig. Ein weiterer Nachteil liegt im Schrumpfen des Mörtels beim Trockenprozess.

Alternativ findet sogenannter Expansionsmörtel Verwendung, bei dem jedoch die hinreichende Verfüllung der Durchlassöffnung, insbesondere bei porösem Mauer werk, nicht unbedingt gewährleistet ist, da der Expansionsmörtel anfänglich eine niedrige Viskosität aufweist und unkontrolliert in Hohlräume der Gebäudewand eindringen kann. Ein wesentlicher Teil des Materials steht dann nicht mehr für die Ver füllung der Durchlassöffnung zur Verfügung.

Die DE 196 28 988 A1 zeigt ein Verfahren nach dem Oberbegriff des Anspruchs 1 und eine Durchführungshülse nach dem Oberbegriff des Anspruchs 8. Dort wird eine Leitungsdurchführung unter Verwendung einer Füllsubstanz in einer Kernbohrung fixiert, wobei mit Zentrierscheiben und Zentrferexzentem eine genaue zentrische Ausrichtung eingestellt werden kann.

Die EP 1 101 993 A zeigt ein Verfahren zur Befestigung einer Leitungsdurchführung und eine dazu angepasste Durchführungshülse. Hier wird ein Gewebesack mit einer expandierenden Füllsubstanz gefüllt und verpresst die Leitungsdurchführung in einer Durchlassöffnung einer Gebäudewand.

Die JP 08 019 143 A zeigt eine Leitungsdurchführung mit einer nach innen deformierbaren Seitenwand, bei der ein durch die Leitungsdurchführung verlegter Kabelstrang aufgespleißt und die Zwischenräume der Kabel mit einem Dichtmaterial verfüllt werden können.

Dieser Erfindung liegt das Problem zugrunde, Leitungsdurchführungen durch Durchlassöffnungen in Gebäudewänden effizient und anwendungssicher herzustellen.

Die Erfindung löst das Problem mit einem Verfahren zur Befestigung einer Leitungsdurchführung in einer Durchlassöffnung einer Gebäudewand, bei dem eine die Leltungsdurchführung umschließende Durchführungshülse innerhalb der Durchlassöffnung befestigt wird, wobei die Durchführungshülse zwei in Durchführungsrichtung beabstandete Abschlussstücke mit je einer Öffnung für die Leitungsdurchführung und einen flexiblen, die Abschlussstücke verbindenden Mantel sowie eine Dichtscheibe besitzt, die größer als die Durchlassäffnung ist und mit der die Durchlassöffnung auf einer die Durchlassöffnung umgebenden Außenfläche abgedichtet wird, wobei die Dichtscheibe mit einem der Abschlussstücke identisch sein kann, und bei welchem Verfahren eine Füllsubstanz aushärtet und die Dichtscheibe mit einer Spannvorrichtung bis zum Aushärten der Füllsubstanz auf die Außenfläche gezogen wird, dadurch gekennzeichnet, dass die Durchführungshülse durch die Einwirkung eines Drucks der fließfähigen Füllsubstanz senkrecht zur Durchführungsrichtung expandiert wird und die Füllsubstanz in expandiertem Zustand aushärtet,

sowie einer Durchführungshülse für ein solches Verfahren mit zwei in Durchführungsrichtung beabstandeten Abschlussstücken mit je einer Öffnung für die Leitungsdurchführung und mit einer Dichtscheibe zum Abdichten auf einer die Durchlassöffnung umgebenden Außenfläche, wobei die Dichtscheibe mit einem der Abschlussstücke identisch sein kann, sowie mit einer Spannvorrichtung zum Anziehen der Dichtscheibe auf die Außenfläche bis zum Aushärten einer Füllsubstanz, dadurch gekennzeichnet, dass die Durchführungshülse einen die Abschlussstücke verbindenden, flexiblen Mantel ausweist, und der Mantel und die Abschlussstücke ein Volumen zur Aufnahme der Füllsubstanz bilden.

Bevorzugte Ausgestaltungen der verschiedenen Aspekte der Erfindung sind in den abhängigen Ansprüchen angegeben und ergeben sich desweiteren aus der folgenden Beschreibung. Dabei wird nicht im Einzelnen zwischen Verfahrens-, Verwendungs- und Vorrichtungsmerkmalen der Erfindung unterschieden, sodass die folgende Offenbarung im Hinblick auf alle diese Kategorien zu verstehen ist.

Die Grundidee dieser Erfindung basiert auf der Verwendung einer Hülse, der sogenannten Durchführungshülse, die die Leitungsdurchführung umschließt. Im Inneren der Hülse befindet sich eine fließfähige Füllsubstanz, durch deren Druck die Hülse nach Einführen in die Durchlassöffnung der Gebäudewand senkrecht zur Durchführungsrichtung expandiert werden kann. Die Durchführungshülse expandiert dabei bis auf das Maß der Querschnittsfläche der Durchlassöffnung, sodass die Durchführungshülse in der Durchlassöffnung verpresst wird. Die Befestigung der Durchführungshülse innerhalb der Durchlassöffnung erfolgt dabei durch Haftreibung und/oder Formschluss. Gemäß der Erfindung härtet die Füllsubstanz im expandierten Zustand der Durchführungshülse aus, sodass die Befestigungswirkung dauerhaft erhalten bleibt.

Mit dem Begriff Leitungsdurchführung wird im Folgenden ein Leerrohr zur Aufnahme eines Leitungsstückes oder ein Leitungsstück selbst bezeichnet. Dabei handelt es sich bei Gebäuden typischerweise um Leitungen für Strom, Wasser, Gas, Femwärme oder um Telekommunikationsleitungen.

Die erfindungsgemäße Durchführungshülse besitzt zwei Abschlussstücke und einen Mantel aus flexiblem Material, der die Abschlussstücke verbindet und die Leitungsdurchführung umschließt. Prinzipiell sind auch Ausführungsformen inbegriffen, beidenen die Abschlussstücke und der Mantel einstückig sind.

Dabei besitzen die Abschlussstücke jeweils eine Öffnung, sodass die Leitungsdurchführung durch die Hülse geführt sein oder werden kann. Es kann sowohl die Leitungsdurchführung fest mit der Hülse verbunden sein, als auch die Leitungsdurchführung erst bei der Verwendung der Durchführungshülse durch diese durchgeführt und mit einer geeigneten Haltevorrichtung befestigt werden.

Die Durchführungshülse stellt bei dieser Erfindung ein Volumen zur Aufnahme der Füllsubstanz dar, welche vorzugsweise durch eine chemische Reaktion ihr Volumen vergrößert, um den notwendigen Druck zur Expansion der Durchführungshülse aufzubauen. Alternativ kann dieser Druck der Hülse auch über eine externe Vorrichtung, beispielsweise eine Pumpe oder Presse, oder einfach durch manuelle Betätigung der Befüllvorrichtung zugeführt werden.

Neben oder statt der Abdichtung der Leitungsdurchführung innerhalb der Durchlassöffnung ist bei vielen Wandaufbauten, vorzugsweise bei Außenwänden von Gebäuden, eine Abdichtung auf der Außenfläche der Wand, die die Durchlassöffnung umgibt, wünschenswert, wobei die Wand mit einer zusätzlichen dichtenden Beschichtung versehen sein kann. Hierzu ist erfindungsgemäß eine Dichtscheibe mit im Vergleich zu in die Durchlassöffnung eingeführten Abschlussstücken größerer Bauform vorgesehen, insbesondere mit größerem Durchmesser als die Durchlassöffnung, welche Dichtscheibe mit einer Spannvorrichtung bis zum Aushärten der Füllsubstanz auf die Außenfläche gezogen wird. Damit kann die Durchführungshülse mit einem kleineren Abschlussstück und dem Mantel in die Durchlassöffnung eingeführt werden und die Dichtscheibe kann als zweites und größeres Abschlussstück außer halb der Durchlassöffnung verbleiben und auf der die Durchlassöffnung umgebenden Wandfläche abdichten. Bei dieser Form der Abdichtung der Durchlassöffnung genügt im Prinzip die befestigende Wirkung der Durchführungshülse im Inneren der Durchlassöffnung, wenngleich eine zusätzliche Dichtwirkung der Durchführungshülse natürlich nur von Vorteil sein kann. Zusätzlich zur Befestigung der Leitungsdurchführung muss die Durchführungshülse den für die Abdichtung auf der äußeren Wandfläche notwendigen Anpressdruck der Dichtscheibe gewährleisten.

Erfindungsgemäß sind hierbei mehrere Ausführungen möglich: Die Dichtscheibe kann, wie bereits erwähnt, mit einem Abschlussstück zusammenfallen. Dabei kann ein Teil dieses Bauteils als "Abschlussstück" in die Durchlassöffnung hineinragen und ein anderer Teil desselben Bauteils als "Dichtscheibe" davor liegen. Die Funktion des Abschlussstücks kann aber auch allein durch ein außerhalb der Durchlassöffnung anliegendes größeres Teil gewährleistet werden. Andererseits kann die Dichtscheibe ein zusätzliches Bauteil zu dem zweiten Abschlussstück bilden und insbesondere an der Hülse befestigt werden, etwa durch ein Gewinde aufgeschraubt werden. Dichtscheibe und Abschlussstück können also zusammenfallen, müssen das aber nicht.

Die Dichtscheibe kann also das größere Abschlussstück sein und dient der Abdichtung der Außenwand; sie wird mit einer Spannvorrichtung an die zu dichtende Wandfläche gepresst, bis die Füllsubstanz in der Durchführungshülse ausgehärtet ist und somit die Durchführungshülse den notwendigen Anpressdruck für die Abdichtung aufrecht hält.

Als bevorzugte Füllsubstanz wird ein 2-Komponenten-Material verwendet, welches nach Einführen der Durchführungshülse in die Durchlassöffnung in die Durchlasshülse injiziert wird, etwa PU-Schaum.

Hier zeigt sich in besonderem Maße der Vorteil der Erfindung, da die Ausgangssubstanzen von 2-Komponenten-Materialien eine niedrige Viskosität besitzen können und diese und das unter Umständen anfänglich ebenfalls relativ flüssige Reaktionsprodukt von der Hülse insbesondere für die Dauer der chemischen Reaktion am gewünschten Ort innerhalb der Durchlassöffnung gehalten werden. Diese Funktionsweise der erfindungsgemäßen Durchführungshülse ist in besonderem Maß bei porösem Mauerwerk oder bei einem Wandaufbau mit eingeschlossenen Hohlräumen wichtig.

Vorzugsweise erfolgt die Injektion des 2-Komponenten-Materials durch eine weitere Öffnung eines Abschlussstückes, nämlich eine sogenannte Injektionsöffnung. Dabei kann die injektionsöffnung für die Aufnahme einer Spritzdüse bzw. Kanüle einer handelsüblichen Kartusche ausgelegt sein. Weiterhin muss sie so gestaltet sein, dass durch die injizierte Füllsubstanz ein Druckaufbau im Inneren der Durchführungshülse möglich ist.

Neben der Injektion der expansionsfähigen Füllsubstanz ist es ebenfalls möglich, dass die Komponenten der Füllsubstanz getrennt voneinander bereits in der Durchführungshülse enthalten sind und diese erst nach Einführen der Durchführungshülse in die Durchlassöffnung in Kontakt gebracht werden, um die die Expansion verursachende chemische Reaktion in Gang zu setzen.

In vorteilhafter Weise ist als Material für den Mantel der Hülse ein Elastomer vorzuziehen, welches aufgrund seiner elastischen Eigenschaften eine kontrollierte Expansion der Durchführungshülse bei einem bestimmten Druck erlaubt. Die zunehmende Dehnung des Mantels bei einem steigenden Druck im Inneren der Hülse führt zu der gewünschten Verpressung in der Durchlassöffnung. Aufgrund der elastischen Dehnung des Mantels passt sich dieser an die Topographie der Innenfläche der Durchlassöffnung an und bewirkt so einen Formschluss zwischen der Innenfläche und der Durchführungshülse. Dabei werden Risse oder Hohlräume innerhalb der Gebäudewand durch den Mantel überbrückt und eine Minderung der Befestigungswirkung der Durchführungshülse aufgrund einer übermäßigen Expansion der Füllsubstanz in diese Hohlräume vermieden.

Vorzugsweise besitzt der flexible Mantel eine Durchlässigkeit für die Füllsubstanz ab einem bestimmten Druckschwellenwert. Der Druckschwellenwert liegt dabei in einem Bereich, dessen untere Grenze zunehmend bevorzugt bei 5, 8, 11, 14 oder 16 mbar und dessen obere Grenze zunehmend bevorzugt bei 50, 40, 30, 25 oder 20 mbar liegt. Dadurch wird erreicht, dass bei der Expansion der Füllsubstanz die Durchführungshülse in einer ersten Phase vollständig gefüllt wird, dann in einer zweiten Phase die Expansion der Durchführungshülse senkrecht zur Durchführungsrichtung durch die Dehnung des flexiblen Mantels aufgrund des sich in der Durchführungshülse aufbauenden Druckes erfolgt und erst ab dem bestimmten Druckschwellenwert in einer dritten Phase die weiter expandierende Füllsubstanz durch den Mantel der Durchführungshülse aus dieser austritt.

Das Austreten der Füllsubstanz ab einem-bestimmten Druckschwellenwert durch den Mantel kann beispielsweise durch eine Perforation des Mantels erzielt werden, wobei sich die Perforationsöffnungen durch die Dehnung des Mantels bei der Expansion der Durchführungshülse öffnen und so den Austritt der Füllsubstanz gewährleisten. Daneben sind ebenso Mechanismen zum Austritt der Füllsubstanz durch den Mantel denkbar, die auf der Zerstörung, beispielsweise einem Zerreißen oder einem Auflösen, von Bestandteilen des Mantels durch die Füllsubstanz basieren.

Wie zuvor dargestellt, erfolgt durch die Expansion der Durchführungshülse eine Verpressung, wodurch die Leitungsdurchführung in der Durchlassöffnung in der Wand befestigt wird. Darüber hinaus kann durch diese Verpressung bei geeigneter Oberflächenbeschaffenheit im Inneren der Durchlassöffnung eine Abdichtung der Durchlassöffnung durch die Durchführungshülse erfolgen. Diese Abdichtwirkung wird gegebenenfalls besonders bei rauen oder porösen Oberflächen bzw. bei einem Wandaufbau mit Lufteinschlüssen durch die ab einem bestimmten Druckschwellenwert aus dem Mantel austretende Füllsubstanz deutlich verbessert.

Im Folgenden soll die Erfindung anhand von Ausführungsbeispielen näher erläutert werden, wobei die dabei offenbarten Merkmale auch in anderen Kombinationen erfindungswesentlich sein können und weiterhin nicht zwischen Verfahrens- und Vorrichtungsaspekten der Erfindung unterschieden wird.

Im Folgenden zeigt:
- Figur 1: eine schematische Darstellung einer erfindungsgemäßen Durchführungshülse in einer Durchlassöffnung 2 einer Gebäudewand 3.
- Figur 2: eine schematische Darstellung einer erfindungsgemäßen Durchführungshülse mit perforiertem Mantel 6a.

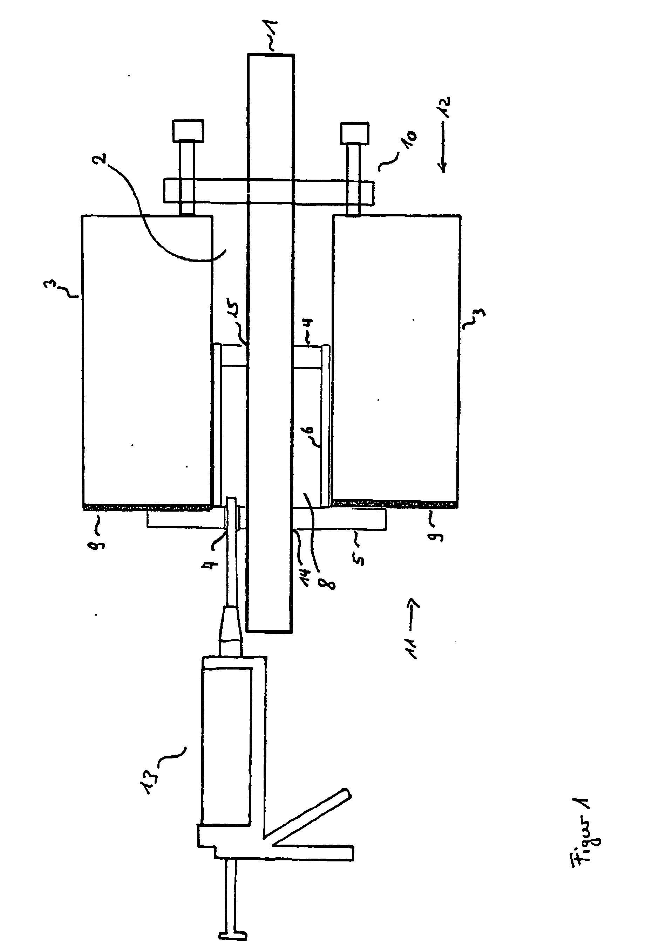

In Figur 1 sind ein Mantel 6 und ein Abschlussstück 4 der Durchführungshülse bereits in eine Durchlassöffnung 2 eingeführt. Ein weiteres Abschlussstück 5, das gleichzeitig eine Dichtscheibe und im Durchmesser größer als die Durchlassöffnung 2 ist, befindet sich auf der Außenseite 11 der Gebäudewand 3. Eine Leitungsdurchführung 1, die die Durchführungshülse durch die Öffnungen 14, 15 durchdringt, führt von der Außenseite 11 der Gebäudewand 3 durch die Durchlassöffnung 2 zur Innenseite 12. Die Leitungsdurchführung 1 durch die Durchlassöffnung 2 ist fest mit der Dichtscheibe 5 der Durchführungshülse verbunden. Ebenso ist eine Ausführungsform denkbar, bei der die Öffnung 14 der Dichtscheibe 5 eine Haltevorrichtung für die Leitungsdurchführung 1 besitzt, um eine Befestigung der Durchführungshülse an der Leitungsdurchführung 1 erst kurz vor der Montage zu ermöglichen.

In diesem Beispiel ist die Leitungsdurchführung 1 ein Lehrrohr zur Aufnahme eines Leitungsstückes. Prinzipiell kann die Leitungsdurchführung 1 ebenso ein Leitungsstück, beispielsweise eine Strom-, Wasser-, Gas-, Fernwärme- oder Telekommunikationsleitung, sein.

Die Gebäudewand 3 ist auf der Außenseite 11 mit einer Außenabdichtung 9 beschichtet, auf die die Dichtscheibe 5 angepresst wird, um die Durchlassöffnung 2 auf der sie umgebenden Außenfläche der Gebäudewand 3 abzudichten. Der für die Abdichtung auf der Außenabdichtung 9 notwendige Anpressdruck der Dichtscheibe 5 wird temporär mit einer Spannvonichtung 10 aufgebaut. Die Spannvorrichtung 10 ist hierzu an der Leitungsdurchführung 1 befestigt, sodass die Kraft, die zum Aufbau des notwendigen Anpressdrucks der Dichtscheibe 5 erforderlich ist, von der Leitungsdurchführung 1 übertragen wird. Dabei ist die Spannvorrichtung 10 auf der Innenseite 12 der Gebäudewand 3 gegen die Wandfläche verspannbar, sodass die Leitungsdurchführung 1 und die Dichtscheibe 5 in Richtung der Innenseite 12 der Gebäudewand 3 gezogen werden.

Zur dauerhaften Befestigung der Durchführungshülse in der Durchlassöffnung 2 wird in das Volumen 8 der Durchführungshülse ein 2-Komponenten-PU-Schaum eingefüllt. Dies erfolgt mit einer konventionellen Kartusche 13 über die Injektionsöffnung 7 des Abschlussstückes 5. Der In das Volumen 8 eingebrachte PU-Schaum beginnt in der Durchführungshülse zu expandieren und füllt so das Volumen 8. Die weitere Expansion des PU-Schaums bewirkt einen Druckanstieg im Inneren der Durchführungshülse der zur einer Expansion der Mantels 6 führt, dessen Material ein Elastomer ist. Dadurch wird die Durchführungshülse im Inneren der Durchlassöffnung 2 an die Gebäudewand 3 gepresst und so in dieser befestigt. Nach dem Aushärten des PU-Schaums in der Durchführungshülse kann die Spannvorrichtung 10 von der Leitungsdurchführung 1 entfernt werden und wird die Dichtscheibe 5 durch die Verankerung des expandierten Mantels 6 innerhalb der Durchlassöffnung 2 gehalten.

Damit ist die erfindungsgemäße Befestigung der Leitungsdurchführung 1 in der Durchlassöffnung 2 erreicht. Weiterhin dichtet die Dichtscheibe 5 durch ihren Andruck auf die Außenabdichtung 9 der Gebäudewand 3 die Durchlassöffnung 2 ab.

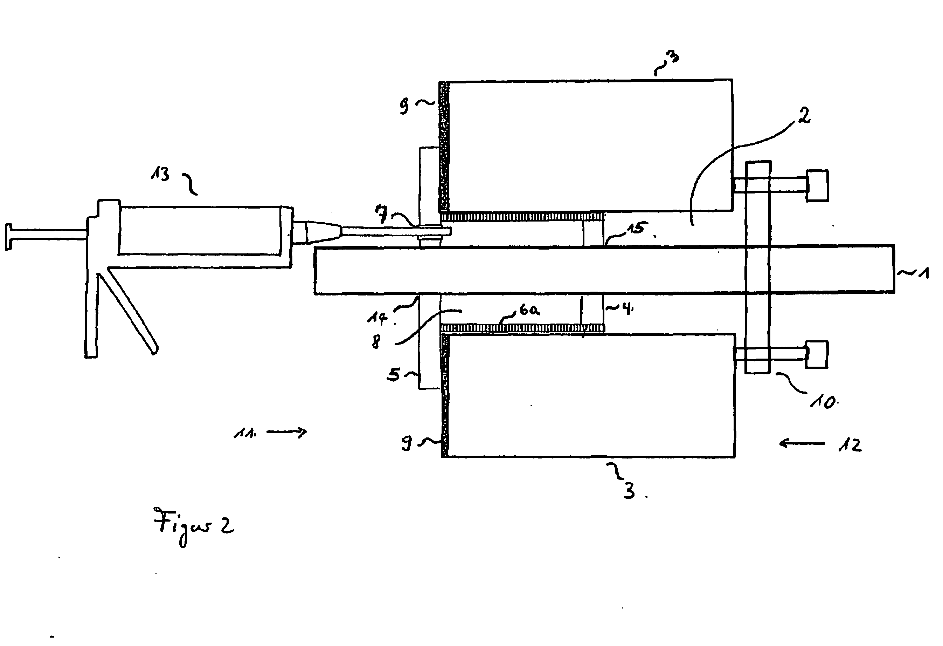

Das zweite Ausführungsbeispiel in Figur 2 unterscheidet sich durch den Mantel 6a von dem aus Figur 1. Der Mantel 6a in Figur 2 ist ergänzend zu den Eigenschaften des Mantels 6 in Figur 1 mit einer Perforation versehen. Diese Perforation ermöglicht den Austritt des PU-Schaums aus dem Volumen 8 der Durchführungshülse ab einem Druckschwellenwert von 18 mbar. Durch den aus dem Mantel 6a austretenden PU-Schaum bietet dieses Ausführungsbeispiel der Durchführungshülse eine verbesserte Befestigung und Abdichtung der Leitungsdurchführung 1 in der Durchlassöffnung 2 durch den PU-Schaum zwischen Mantel 6a und Innenfläche der Durchlassöffnung 2. Dies ist insbesondere bei einer Durchlassöffnung 2 mit einer rauen oder mit Rissen durchzogenen Innenfläche der Durchlassöffnung 2, ebenso bei Hohlräumen innerhalb der Gebäudewand 3 vorteilhaft.

## Patentansprüche

1. Verfahren zur Befestigung einer Leitungsdurchführung (1) in einer Durchlassöffnung (2) einer Gebäudewand (3), bei dem eine die Leitungsdurchführung (1) umschließende Durchführungshülse innerhalb der Durchlassöffnung (2) befestigt wird,
wobei die Durchführungshüfse
eine Dichtscheibe (5, 5a, 16) besitzt, die größer als die Durchlassöffnung (2) ist und mit der die Durchlassöffnung (2) auf einer die Durchlassöffnung (2) umgebenden Außenfläche abgedichtet wird, wobei die Dichtscheibe (5, 5a, 16) mit einem der Abschlussstücke (4, 5, 5a, 5b) identisch sein kann,
und bei welchem Verfahren eine Füllsubstanz in expandiertem Zustand, aushärtet und die Dichtscheibe (5) mit einer Spannvorrichtung (10) bis zum Aushärten der Füllsubstanz auf die Außenfläche gezogen wird,
**dadurch gekennzeichnet, dass** die Durchführungshülse zwei in Durchführungsrichtung beabstandete Abschlussstücke (4, 5, 5a, 5b) mit je einer Öffnung (14, 15) für die Leitungsdurchführung (1) und einen flexiblen, die Abschlussstücke (4, 5, 5a, 5b) verbindenden Mantel (6, 6a) besitzt und durch die Einwirkung eines Drucks der fließfähigen Füllsubstanz senkrecht zur Durchführungsrichtung expandiert wird und die Füllsubstanz aushärtet.

2. Verfahren nach einem der vorstehenden Ansprüche, bei dem das Material des Mantels (6, 6a) ein Elastomer ist.

3. Verfahren nach einem der Ansprüche 1 und 2, bei dem die Füllsubstanz ab einem bestimmten Druckschwellenwert durch den Mantel (6a) austritt.

4. Verfahren nach Anspruch 3, bei dem der Druckschwellenwert zwischen 5 und 50 mbar liegt.

5. Verfahren nach Anspruch 3, auch in Verbindung mit einem weiteren der vorstehenden Ansprüche, bei dem der Mantel (6a) perforiert ist und die Perforationsöffnungen den Austritt der Füllsubstanz aus dem Inneren der Durchführungshülse ab dem Druckschwellenwert ermöglichen.

6. Verfahren nach einem der vorstehenden Ansprüche, bei dem sich die durch den Mantel (6, 6a) verbundenen Abschlussstücke (4, 5, 5a, 5b, 16) einander bei der Expansion der Durchführungshülse in Durchführungsrichtung nähern und so die Dichtscheibe (5, 5a, 16) auf die Außenfläche gezogen wird.

7. Durchführungshülse für ein Verfahren zur Befestigung einer Leitungsdurchführung (1) gemäß einem der Ansprüche 1 - 6 mit zwei in Durchführungsrichtung beabstandeten Abschlussstücken (4, 5, 5a, 5b) mit je einer Öffnung (14, 15) für die Leitungsdurchführung (1)
und mit einer Dichtscheibe (5, 5a, 16) zum Abdichten auf einer die Durchlassöffnung (2) umgebenden Außenfläche, wobei die Dichtscheibe (5, 5a, 16) mit einem der Abschlussstücke (4, 5, 5a, 5b) identisch sein kann,
sowie mit einer Spannvorrichtung (10) zum Anziehen der Dichtscheibe (5) auf die Außenfläche bis zum Aushärten einer Füllsubstanz,
**dadurch gekennzeichnet, dass** die Durchführungshülse einen die Abschlussstücke (4, 5, 5a, 5b) verbindenden, flexiblen Mantel (6, 6a) aufweist,
und der Mantel (6, 6a) und die Abschlussstücke (4, 5, 5a, 5b) ein Volumen (8) zur Aufnahme der Füllsubstanz bilden.

8. Durchführungshülse nach Anspruch 7, bei der die Leitungsdurchführung (1) fest mit einem Abschlussstück (4, 5, 5a, 5b) verbunden ist.

9. Durchführungshülse nach Anspruch 7 oder 8, bei der ein Abschlussstück (4, 5b) eine Haltevorrichtung zur Befestigung der Dichtscheibe (16) besitzt.

10. Durchführungshülse nach einem der Ansprüche 7 - 9, bei der die Dichtscheibe (5, 5a) ein Abschlussstück (5, 5a) ist.

11. Durchführungshülse nach einem der Ansprüche 7 - 10, bei der die Leitungsdurchführung (1) ausgewählt ist aus der Gruppe bestehend aus Stromleitung, Wasserleitung, Gasleitung, Telekommunikationsleitung und Leerrohr zur Aufnahme einer solchen Leitung.

12. Durchführungshülse nach einem der Ansprüche 7 - 11, bei der der Mantel (6a) ab einem Druckschwellenwert zwischen 5 und 50 mbar für die Füllsubstanz durchlässig ist.

13. Verwendung einer Durchführungshülse gemäß einem der Ansprüche 7-12 zur Befestigung einer Leitungsdurchführung (1) in einer Durchlassöffnung (2) einer Gebäudewand (3).

14. Verwendung nach Anspruch 13 gemäß einem Verfahren nach einem der Ansprüche 1 - 6.

## Claims

1. Method for fastening a conduit duct (1) in a through-opening (2) of a building wall (3), in which a grommet enclosing said conduit duct (1) is fastened within said through-opening (2),
wherein said grommet comprises a sealing plate (5, 5a, 16) which is larger than said through-opening (2) and with which said through opening (2) is sealed on an outer surface surrounding said through-opening (2), wherein said sealing plate (5, 5a, 16) can be identical with an end piece (4, 5, 5a, 5b),
and in which method a filler substance cures in an expended state and said sealing plate (5) is pulled onto said outer surface by a tensioning device (10) until said filler substance cures,
**characterized in that** said grommet comprises two end pieces (4, 5, 5a. 5b) spaced apart from one another in a duct direction with one respective opening (14, 15) for said conduit duct (1) and a flexible jacket connecting said end pieces (4, 5, 5a, 5b), wherein said grommet is expended by the action of a pressure of a free-flowing filler substance perpendicular to said duct direction and said filler substance cures.

2. Method according to claim 1, wherein the material of said jacket (6, 6a) is an elastomer.

3. Method according to claim 1 or 2, in which, from a specific pressure threshold value, said filler substance escapes through said jacket (6a).

4. Method according to claim 3, in which said pressure threshold value is between 5 and 50 mbar.

5. Method according to claim 3, also in combination with another of said preceding claims, in which said jacket (6a) is perforated and said perforation openings permit, from said pressure threshold value, said escape of said filler substance from the inside of said grommet.

6. Method according to one of the preceding claims, in which said end pieces (4, 5, 5a, 5b, 16) connected by said jacket (6, 6a) are approaching each other during said expansion of said grommet in said duct direction and thus said sealing plate (5, 5a, 16) is pulled onto said outer surface.

7. Grommet for a method for fastening a conduit duct (1) according to one of claims 1 - 6, with two end pieces (4, 5, 5a, 5b) spaced apart from one another in said duct direction, with one respective opening (14, 15) for said conduit duct (1)
and with a sealing plate (5, 5a, 16) for sealing on an outer surface surrounding said through-opening (2), wherein said sealing plate (5, 5a, 16) can be identical with one of said end pieces (4, 5, 5a, 5b),
and with a tensioning device (10) for pulling said sealing plate (5) onto said outer surface until a filler substance cures,
**characterized in that** said grommet comprises a flexible jacket (6, 6a) connecting said end pieces (4, 5, 5a, 5b),
and said jacket (6, 6a) and said end pieces (4, 5, 5a, 5b) define a volume (8) for receiving said filler substance.

8. Grommet according to claim 7, in which said conduit duct (1) is fixedly connected to an end piece (4, 5, 5a, 5b).

9. Grommet according to claim 7 or 8, in which an end piece (4, 5b) has a holding device for fastening said sealing plate (16).

10. Grommet according to one of claims 7 - 9, in which said sealing plate (5, 5a) is an end piece (5. 5a).

11. Grommet according to one of claims 7 - 10, in which said conduit duct (1) is selected from said group consisting of an electrical conduit, water conduit, gas conduit, telecommunications conduit and an empty conduit for receiving such a conduit.

12. Grommet according to one of claims 7 - 11, in which, from a pressure threshold value of between 5 and 50 mbar, said jacket (6a) is permeable to said filler substance.

13. Use of a grommet according to one of claims 7 - 12 for fastening a conduit duct (1) in a through-opening (2) of a building wall (3).

14. Use of a grommet according to claim 13, according to a method according to one of claims 1-6.

## Revendications

1. Procédé de fixation d'un passage de conduite (1) dans une ouverture de passage (2) d'une paroi de bâtiment (3), dans lequel un manchon de passage entourant le passage de conduite (1) est fixé à l'intérieur de l'ouverture de passage (2),
le manchon de passage possédant une plate d'étanchéité (5, 5a, 16) de taille supérieure à celle de l'ouverture de passage (2) et avec laquelle l'ouverture de passage (2) est hermétiquement obturée sur une surface extérieure entourant l'ouverture de passage (2), la plate d'étanchéité (5, 5a, 16) pouvant être identique à une pièce de fermeture (4, 5, 5a, 5b),
et dans lequel procédé une substance de remplissage subit un durcissement à l'état expansé
et la plate d'étanchéité (5) est étirée sur la surface extérieure avec un dispositif de tension (10) jusqu'au durcissement de la substance de remplissage, **caractérisé en ce que** le manchon de passage possède deux pièces de fermeture (4, 5, 5a, 5b) espacées dans le sens du passage et présentant chacune une ouverture (14, 15) destinée au passage de conduite (1) et une enveloppe souple (6, 6a) reliant les pièces de fermeture (4, 5, 5a, 5b), et est expansé sous l'action d'une pression exercée par une substance de remplissage fluide perpendiculairement au sens du passage et la substance de remplissage subit un durcissement.

2. Procédé selon la revendication 1, dans lequel le matériau de l'enveloppe (6, 6a) est un élastomère.

3. Procédé selon l'une des revendications 1 et 2, dans lequel la substance de remplissage sort à travers l'enveloppe (6a) à partir d'une certaine valeur seuil de pression.

4. Procédé selon la revendication 3, dans lequel la valeur seuil de pression se situe entre 5 et 50 mbar.

5. Procédé selon la revendication 3, également en liaison avec une autre des revendications précédentes, dans lequel l'enveloppe (6a) est perforée et les ouvertures de perforation permettent la sortie de la substance de remplissage de l'intérieur du manchon de passage à partir de la valeur seuil de pression.

6. Procédé selon l'une des revendications précédentes, dans lequel les pièces de fermeture (4, 5, 5a, 5b, 16) reliées par l'enveloppe (6, 6a) se rapprochent les unes des autres lors de l'expansion du manchon de passage dans le sens du passage et la plate d'étanchéité (5, 5a, 16) est ainsi étirée sur la surface extérieure.

7. Manchon de passage pour un procédé de fixation d'un passage de conduite (1) selon l'une des revendications 1 à 6, comportant deux pièces de fermeture (4, 5, 5a, 5b) espacées dans le sens du passage et présentant chacune une ouverture (14, 15) destinée au passage de conduite (1) et comportant une plate d'étanchéité (5, 5a, 16) destinée à effectuer une obturation hermétique sur une surface extérieure entourant l'ouverture de passage (2), la plate d'étanchéité (5, 5a, 16) pouvant être identique à l'une des pièces de fermeture (4, 5, 5a, 5b),
et comportant un dispositif de tension (10) pour étirer la plate d'étanchéité (5) sur la surface extérieure jusqu'au durcissement d'une substance de remplissage,
**caractérisé en ce que** le manchon de passage présente une enveloppe (6, 6a) souple reliant les pièces de fermeture (4, 5, 5a, 5b),
et l'enveloppe (6, 6a) et les pièces de fermeture (4, 5, 5a, 5b) forment un volume (8) destiné au logement de la substance de remplissage.

8. Manchon de passage selon la revendication 7, dans lequel le passage de conduite (1) est relié fixement à une pièce de fermeture (4, 5, 5a, 5b).

9. Manchon de passage selon la revendication 7 ou 8, dans lequel une pièce de fermeture (4, 5b) possède un dispositif de retenue permettant la fixation de la plate d'étanchéité (16).

10. Manchon de passage selon l'une des revendications 7 à 9, dans lequel la plate d'étanchéité (5, 5a) est une pièce de fermeture (5, 5a).

11. Manchon de passage selon l'une des revendications 7 à 10, dans lequel le passage de conduite (1) est sélectionné dans le groupe constitué par une ligne électrique, une conduite d'eau, une conduite de gaz, une ligne de télécommunications et un tuyau vide destiné au logement d'une telle ligne ou conduite.

12. Manchon de passage selon l'une des revendications 7 à 11, dans lequel l'enveloppe (6a) est perméable à la substance de remplissage à partir d'une valeur seuil de pression comprise entre 5 et 50 mbar.

13. Utilisation d'un manchon de passage selon l'une des revendications 7 à 12 pour la fixation d'un passage de conduite (1) dans une ouverture de passage (2) d'une paroi de bâtiment (3).

14. Utilisation selon la revendication 13 selon un procédé selon l'une des revendications 1 à 6.
